# EUROPÄISCHE PATENTSCHRIFT

(11) **EP 0 486 459 B1**
(45) Veröffentlichungstag und Bekanntmachung des Hinweises auf die Patenterteilung: **15.06.1994**
(21) Anmeldenummer: 91890252.9
(22) Anmeldetag: 23.10.1991
(51) Int. Cl.: A01D 34/73

(54) **Werkzeughalterung für Mäh- bzw. Häckselmaschinen**
Tool mounting for forage harvesters
Fixation d'outil pour récolteuses-hacheuses

(30) Priorität: 16.11.1990 AT 2318/90
(43) Veröffentlichungstag der Anmeldung: 20.05.1992
(73) Patentinhaber: Jetzinger, Franz, A-3364 Neuhofen a.d. Ybbs (AT)
(72) Erfinder: Jetzinger, Franz, A-3364 Neuhofen a.d. Ybbs (AT)
(74) Vertreter: Hübscher, Heiner, Dipl.-Ing.

(56) Entgegenhaltungen:
- EP-A- 0 395 624
- DE-A- 1 582 345
- DE-A- 2 920 244
- FR-A- 1 520 653
- FR-A- 2 026 393

## Beschreibung

Die Erfindung betrifft eine Werkzeughalterung für Mäh- bzw. Häckselmaschinen mit einem rotierenden Werkzeugträger, an dem die Werkzeuge um zur Rotationsachse des Werkzeugträgers parallele Bolzen schwenkbar befestigt sind, wobei die jeweils mindestens ein Werkzeug tragenden Bolzen mit ihren Enden in radial zur Rotationsachse gerichteten Langlöchern von zwei einander gegenüberliegenden, am Werkzeugträger befestigten und von diesem etwa radial abstehenden Laschen oder den Werkzeugträger selbst bildenden Scheiben lose gelagert und im radial äußeren Abschnitt der Langlöcher gegen Axialverschiebung gesichert sind.

Durch die schwenkbare Lagerung der Werkzeuge können diese während der Rotation des Werkzeugträgers beim Auftreffen auf einen harten Gegenstand, beispielsweise einen Stein, ausweichen und werden so vor größeren Beschädigungen bewahrt. Die Bolzen können sich selbstverständlich in den Langlöchern verschieben, d.h. sie nehmen unter der Wirkung der Fliehkraft der Werkzeuge naturgemäß die Stellung am radial äußeren Ende der Langlöcher ein, wo sie gegen Axialverschiebung gesichert sind und daher nicht aus den Langlöchern austreten können. Zum Lösen der Bolzen brauchen sie bzw. die Werkzeuge bei stehendem Werkzeugträger nur zum radial inneren Ende der Langlöcher verschoben zu werden, wo keine Sicherung gegen axiales Verschieben vorhanden ist und die Bolzen daher ausgestoßen werden können. Das Abnehmen bzw. Einsetzen der Werkzeuge ist also ohne Hilfsgerät einfach durchführbar.

Eine solche Werkzeughalterung ist bekannt (EP-A1 0 395 624) und hat sich auch bereits bewährt. Zur Sicherung der Bolzen im radial äußeren Abschnitt der Langlöcher gegen Axialverschiebung ist dabei aber dieser Langlochabschnitt durch an den Laschen bzw. an den den Werkzeugträger bildenden Scheiben angeschweißte Bleche abgedeckt. Dies erhöht nicht nur den Materialaufwand, sondern bringt auch eine in vielen Fällen unerwünschte Vergrößerung der Maße in Achsrichtung des Bolzens mit sich. Außerdem müssen die Laschen bzw. Scheiben verhältnismäßig dick ausgebildet werden, um den Bolzenenden einen ausreichend tiefen Eingriff in die Langlöcher zu gewährleisten. Bei dünnerer Ausbildung der Laschen bzw. Scheiben besteht nämlich die Möglichkeit, daß die einander gegenüberliegenden, die Langlöcher aufweisenden Teile im Bereich der radial äußeren Langlochenden auseinanderklaffen, so daß dann bei nur kurzem Eingriff der Bolzenenden die Bolzen aus den Langlöchern austreten und mit den Werkzeugen durch die Zentrifugalkraft davonfliegen und Personen oder auch Maschinen gefährden bzw. beschädigen können. Die Verstärkung der Laschen bzw. Scheiben vergrößert selbstverständlich ebenfalls das Gesamtmaß in axialer Richtung der Bolzen.

Es ist auch schon bekannt (FR-PS 1 520 653), die Bolzen an einem Werkzeugträger nach oben vorragend fix zu befestigen. Die Werkzeuge werden dann mit Rundlöchern auf die Bolzen aufgesteckt und mit Hilfe von Sicherungsschienen festgehalten, wobei die Sicherungsschienen schlüssellochartige Ausnehmungen aufweisen, so daß sie zunächst mit der Locherweiterung über die Bolzenköpfe gesteckt und dann so verschoben werden können, daß der schmale Teil der Ausnehmungen in eine Einschnürung am Bolzenende eingreift. In dieser Sicherungsstellung für die Werkzeuge werden die Sicherunsschienen durch eine zentrale Schraube am Werkzeugträger festgehalten. Es ist also sowohl zur Messerbefestigung als auch zum Messerwechsel ein Werkzeug erforderlich, da die zentrale Schraube ohne Werkzeu nicht betätigt werden kann.

Bei einer anderen bekannten Ausführung (DE-OS 29 20 244) sind am Schneidteller unterseitig Blattfedern befestigt, die ebenfalls eine schlüssellochförmige Ausnehmung zur Halterung eines Schwenkbolzens für das Messer aufweisen, wobei der Schwenkbolzen am breiteren Teil der Ausnehmung eingeführt und dann zum schmäleren Teil hin verschoben wird, wo die Lochränder in eine Bolzeneinschnürung eingreifen und ihn so festhalten. Zur Sicherung des Bolzens in dieser Stellung dient eine eigene Platte, die an der Blattfeder angenietet wird, so daß ein Bolzenwechsel Schwierigkeiten bereitet. Das Messer wird auf den Bolzen lediglich aufgesteckt und eine Axialverschiebung des Messers auf dem Bolzen wird dadurch verhindert, daß da Blattfeder das Messer von unten gegen den Schneidteller drückt. Abgesehen davon daß hier auch ein beträchtlicher technischer Aufwand erforderlich ist, kann ein Werkzeugwechsel nicht ohne Werkzeug erfolgen, da ja die Blattfeder vom Schneidteller weggedrückt werden muß, um das Messer abnehmen bzw. auswechseln zu können.

Der Erfindung liegt somit die Aufgabe zugrunde, die eingangs geschilderte Werkzeughalterung so zu verbessern, daß ohne Beeinträchtigung der einfachen Bedienbarkeit die volle Sicherheit gegen ein Lösen der Werkzeuge auch bei extrem dünnen Laschen bzw. Scheiben gewährleistet und außerdem eine Materialeinsparung erreichbar ist.

Die Erfindung löst die gestellte Aufgabe dadurch, daß jeweils die beiden einander gegenüberliegenden Langlöcher in an sich bekannter Weise im radial äußeren Abschnitt verengt sind, wobei die Bolzenenden einen der vollen Langlochbreite angepaßten Durchmesser aufweisen, und daß die Verengungen lediglich durch an den dem anderen Langloch zugekehrten Seiten vorgesehene Vorsprünge der Langlochseitenwände geformt sind und die Bolzen dementsprechende Einschnürungen aufweisen.

Das Bolzenende bildet dann gewissermaßen einen Kopf, der vom Vorsprung der Langlochseitewände untergriffen wird, so daß der Bolzen, da beide Enden und beide Langlöcher gleich ausgebildet sind, die Laschen oder Scheiben wie ein Niet zusammenhält und selbstverständlich auch selbst gegen Axialverschiebung voll gesichert ist, ohne irgendeine Abdeckung zu benötigen. Im radial inneren Langlochbereich fehlt die Verengung, so daß dort der Bolzen wie bisher einfach und werkzeuglos eingeführt oder ausgestoßen werden kann. Der Vorteil der erfindungsgemäßen Konstruktion liegt auch darin, daß die Bolzenenden die Oberflächen der Laschen oder Scheiben nicht zu überragen brauchen und daß die Laschen bzw. Scheiben sehr dünn ausgebildet werden können, da sie durch die Bolzen zusammengehalten werden und ihr Auseinanderklaffen daher unmöglich ist.

Eine besonders zweckmäßige Konstruktion ergibt sich, wenn die einander gegenüberliegenden Langlöcher zur Vorsprungbildung in an sich bekannter Weise hohlkegelige bzw. schräge Flanken besitzen und die Bolzen an beiden Enden konisch erweitert sind. Eine andere Möglichkeit besteht darin, daß die Bolzen eine zylindrische Grundform mit Einstichen für den Eingriff der Langlochvorsprünge aufweisen, in welchem Falle der Bolzendurchmesser im Bereich der Werkzeugaugen nicht verringert zu werden braucht. Es ist selbstverständlich, daß auf dem Bolzen auch zwei oder mehrere Werkzeuge in Form von Messern, Windflügeln od.dgl. gelagert werden können.

Vorteilhaft ist es auch, wenn sich der Abstand der einander gegenüberliegenden Laschen oder Scheiben zum radial inneren Langlochende hin vergrößert oder verkleinert und die Laschen oder Scheiben in Richtung zu- oder voneinander federns ausgebildet sind. Da der Bolzen jeweils die Verengungen der Langlöcher übergreifende Enden aufweist, wird er durch den sich radial einwärts vergrößernden Laschen- bzw. Scheibenabstand daran gehindert, sich einwärts an die Stelle zu bewegen, wo er sich lösen könnte. Hat der Bolzen Einstiche für den Eingriff der Langlochvorsprünge, so hat die Verringerung des Laschen- bzw. Scheibenabstandes gegen das radial innere Langlochende hin die gleiche Wirkung. Es wird dadurch also eine zusätzliche Sicherung gegen eine Bolzenlösung erreicht. Bei der gewollten Bolzenmontage oder -demontage müssen dann natürlich die beiden Laschen bzw. Scheiben zusammengedrückt oder auseinandergebogen werden.

In der Zeichnung ist der Erfindungsgegenstand in mehreren Ausführungsbeispielen dargestellt, und zwar zeigen
- Fig. 1: eine Werkzeughalterung im Schnitt nach der Linie I-I der Fig. 2 im Schaubild,
- Fig. 2: eine zugehörige Draufsicht,
- Fig. 3: einen Querschnitt nach der Linie III-III der Fig. 2, die
- Fig. 4 und 5: zwei Ausführungsvarianten des Bolzens bzw. der Langlöcher im radial äußeren Abschnitt in einer der Fig. 3 entsprechenden Darstellungsweise und
- Fig. 6: eine andere mögliche Ausbildung in Draufsicht.

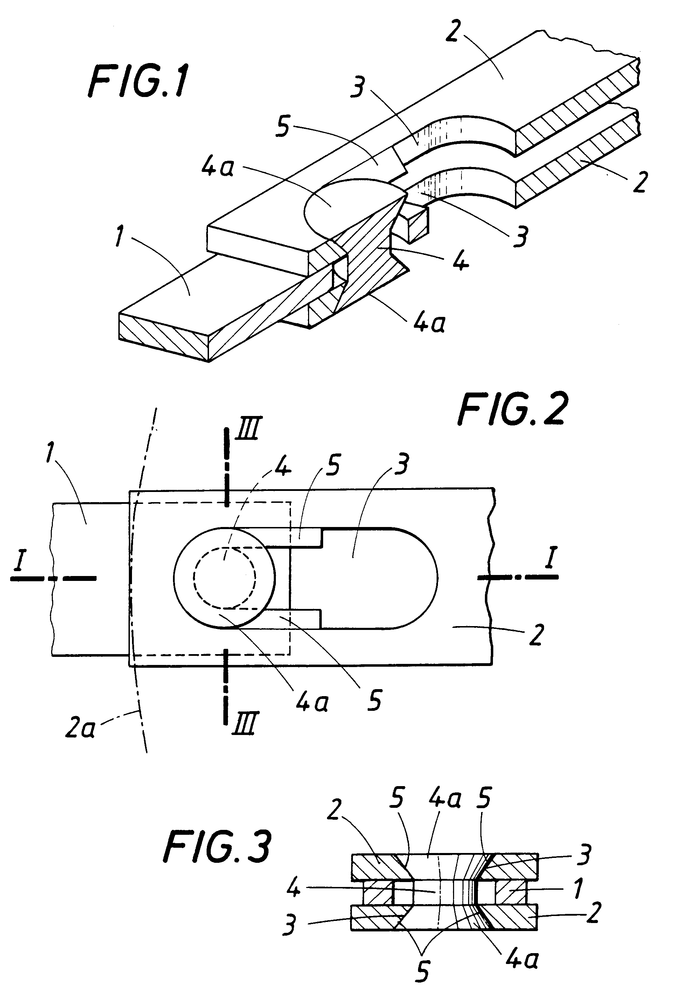

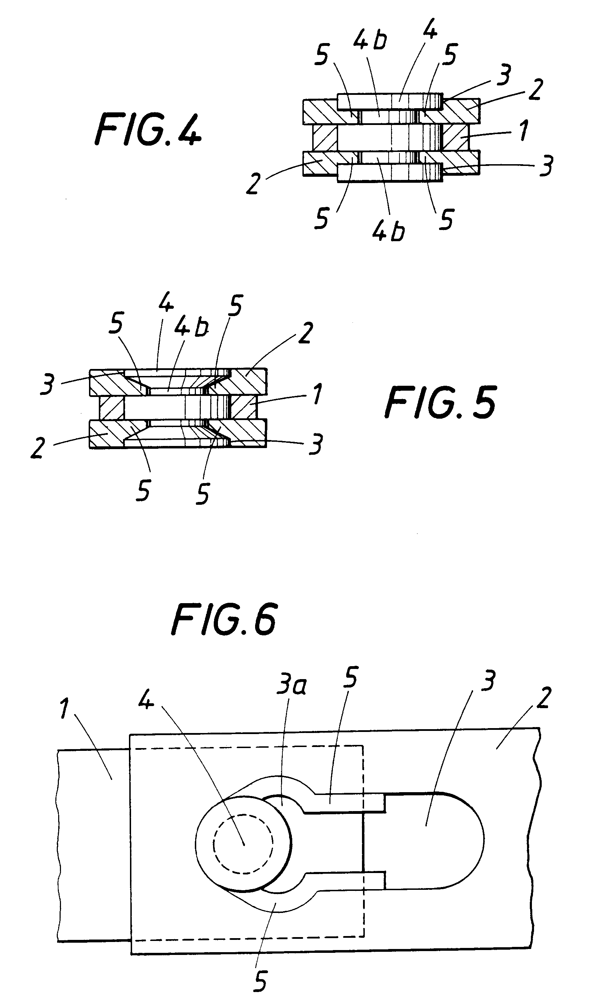

Das Werkzeug, beispielsweise ein Messer 1, ist zwischen zwei einander gegenüberliegenden Laschen 2 gehalten, die an einem rotierenden (nicht dargestellten) Werkzeugträger etwa radial abstehend befestigt sind. An Stelle der Laschen 2 können aber auch Scheiben 2a vorgesehen sein, die selbst den Werkzeugträger bilden (in Fig. 2 strichpunktiert angedeutet). Die einander gegenüberliegenden Laschen 2 bzw. Scheiben 2a weisen radial zur Rotationsachse gerichtete Langlöcher 3 auf, die die Enden eines zur Rotationsachse des Werkzeugträgers parallelen Bolzen 4 aufnehmen, auf dem die Messer 1 schwenkbar gelagert sind. Im radial äußeren Abschnitt weisen die Langlöcher 3 an ihren dem jeweils anderen Langloch zugekehrten Seite einen sie verengenden Vorsprung 5 auf und der Bolzen 3 ist dementsprechend eingeschnürt. Gemäß den Fig. 1 - 3 besitzen die einander gegenüberliegenden Langlöcher 3 zur Vorsprungbildung hohlkegelige bzw. schräge Flanken und der Bolzen 4 ist an beiden Enden 4a konisch erweitert. Im radial inneren Abschnitt fehlen selbstverständlich die Vorsprünge 5, so daß sich dort der Bolzen 4 aus den Langlöchern 3 lösen läßt. Nach den Fig. 4 und 5 weist der Bolzen 4 eine zylindrische Grundform auf und besitzt Einstiche 4b für den Eingriff der Langlochvorsprünge 5.

Fig. 6 zeigt Langlöcher 3, die in ihrem radial äußeren Abschnitt 3a etwa herzförmig erweitert sind, wobei diese Erweiterung aber selbstverständlich solche Maße aufweist, daß der Bolzen 4 zufolge der Vorsprünge 5 nicht durchtreten kann. Die Erweiterung 3a erlaubt es dem Bolzen, sich bei einem stärkeren Schlag auf das Messer 1 an der einen oder anderen schrägen Begrenzungsfläche der Erweiterung etwas abzuwälzen und dadurch eine Dämpfung zu erzielen bzw. eine Weiterleitung des Schlages auf den Werkzeugträger zu mindern.

## Patentansprüche

1. Werkzeughalterung für Mäh- bzw, Häckselmaschinen mit einem rotierenden Werkzeugträger, an dem die Werkzeuge (1) um zur Rotationsachse des Werkzeugträgers parallele Bolzen (4) schwenkbar befestigt sind, wobei die jeweils mindestens ein Werkzeug (1) tragenden Bolzen (4) mit ihren Enden in radial zur Rotationsachse gerichteten Langlöchern (3) von zwei einander gegenüberliegenden, am Werkzeugträger befestigten und von diesem etwa radial abstehenden Laschen (2) oder den Werkzeugträger selbst bildenden Scheiben (2a) lose gelagert und im radial äußeren Abschnitt der Langlöcher (3) gegen Axialverschiebung gesichert sind, dadurch gekennzeichnet, daß jeweils die beiden einander gegenüberliegenden Langlöcher (3) in an sich bekannter Weise im radial äußeren Abschnitt verengt sind, wobei die Bolzenenden einen der vollen Langlochbreite angepaßten Durchmesser aufweisen, und daß die Verengungen lediglich durch an den dem anderen Langloch zugekehrten Seiten vorgesehene Vorsprünge (5) der Langlochseitenwände geformt sind und die Bolzen dementsprechende Einschnürungen (4b) aufweisen.

2. Werkzeughalterung nach Anspruch 1, dadurch gekennzeichnet, daß die einander gegenüberliegenden Langlöcher (3) zur Vorsprungbildung in an sich bekannter Weise hohlkegelige bzw. schräge Flanken besitzen und die Bolzen (4) an beiden Enden (4a) konisch erweitert sind.

3. Werkzeughalterung nach Anspruch 1, dadurch gekennzeichnet, daß die Bolzen (4) eine zylindrische Grundform mit Einstichen (4b) für den Eingriff der Langlochvorsprünge (5) aufweisen.

4. Werkzeughalterung nach den Ansprüchen 1 - 3, dadurch gekennzeichnet, daß sich der Abstand der einander gegenüberliegenden Laschen (2) oder Scheiben (2a) voneinander zum radial inneren Ende der Langlöcher (3) hin vergrößert oder verkleinert und die Laschen (2) oder Scheiben (2a) in Richtung zu- oder voneinander federnd ausgebildet sind.

## Claims

1. A tool mounting for mowing or chopping machines comprising a rotating tool carrier on which the tools (1) are secured so as to be pivotable about bolts (4) parallel to the rotational axis of the tool carrier, the bolts (4), which each carry at least one tool (1), being mounted by their ends loosely in slots (3) directed radially relatively to the rotational axis in two opposite plates (2) secured to the tool carrier and projecting substantially radially therefrom, or discs (2a) themselves forming the tool carrier, and being secured against axial displacement in the radially outer portion of the slots (3), characterised in that each pair of opposite slots (3) are narrowed in the radially outer portion in manner known per se, the bolt ends having a diameter adapted to the full slot width, and in that the narrowings are formed solely by projections (5) of the slot side walls provided on the sides facing the other slot, and the bolts have corresponding constrictions (4b).

2. A tool mounting according to claim 1, characterised in that for the purpose of forming the projections the opposite slots (3) have in manner known per se hollow conical or inclined flanks and the bolts (4) are widened conically at both ends (4a).

3. A tool mounting according to claim 1, characterised in that the bolts (4) have a cylindrical basic shape with recesses (4b) for the engagement of the slot projections (5).

4. A tool mounting according to claims 1 to 3, characterised in that the distance between the opposite plates (2) or discs (2a) increases or decreases towards the radially inner end of the slots (3) and the plates (2) or discs (2a) are constructed so as to be resilient in the direction towards or away from one another.

## Revendications

1. Fixation d'outil, pour moissonneuses, respectivement hacheuses, avec un porte-outil tournant, sur lequel les outils (1) sont montés pivotants autour de boulons (4) parallèles à l'axe de rotation du porte-outil, les boulons (4), portant chacun au moins un outil (1), étant montés lâches, par leurs extrémités, dans des trous oblongs (3), orientés radialement par rapport à l'axe de rotation, de deux pattes (2), opposées l'une à l'autre, fixées sur le porte-outil et faisant saillie (2) de ce dernier, à peu près radialement, ou de deux disques (2a) formant le porte-outil lui-même, et fixés, afin d'empêcher tout déplacement axial, dans la section radialement externe des trous oblongs (3), caractérisée en ce que chacun des trous oblongs (3) opposés entre eux va en se rétrécissant, de manière connue, dans la section radialement extérieure, les extrémités de boulons présentant un diamètre adapté à la pleine largeur du trou oblong, et en ce que les rétrécissements sont réalisés seulement au moyen de saillies (5) des parois latérales de trou oblong, prévues sur les faces tournées vers l'autre trou oblong, et les boulons présentent des étranglements (4b) correspondants.

2. Fixation d'outil selon la revendication 1, caractérisée en ce que les trous oblongs (3), mutuellement opposés, comportent de manière connue en soi, en vue de constituer des saillies, des flancs formant des cônes creux ou obliques, et les boulons (4) sont agrandis de façon conique aux deux extrémités (4a).

3. Fixation d'outil selon la revendication 1, caractérisée en ce que les boulons (4) présentent une forme de base cylindrique, avec des encoches (4b), destinées au contact des saillies (5) des trous oblongs.

4. Fixation d'outil selon les revendications 1 à 3, caractérisée en ce que l'espacement entre les pattes (2) mutuellement opposées ou entre les disques (2a), va en augmentant ou en diminuant en direction radiale de l'extrémité intérieure des trous oblongs (3) et les pattes (2) ou disques (2a) étant dotés d'une élasticité dans la direction de leur rapprochement ou de leur écartement mutuel.
